(19) Europäisches Patentamt
European Patent Office
Office européen des brevets

(11) **EP 2 352 954 B1**

(12) **EUROPÄISCHE PATENTSCHRIFT**

(45) Veröffentlichungstag und Bekanntmachung des Hinweises auf die Patenterteilung:
**10.12.2014   Patentblatt 2014/50**

(21) Anmeldenummer: **09737403.7**

(22) Anmeldetag: **15.10.2009**

(51) Int Cl.:
*F24H 9/20* (2006.01)      *G01F 23/296* (2006.01)

(86) Internationale Anmeldenummer:
**PCT/EP2009/063515**

(87) Internationale Veröffentlichungsnummer:
**WO 2010/046306 (29.04.2010 Gazette 2010/17)**

(54) **WARMWASSERSPEICHER**

HOT WATER TANK

CHAUFFE-EAU À ACCUMULATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **22.10.2008   DE 102008043030**

(43) Veröffentlichungstag der Anmeldung:
**10.08.2011   Patentblatt 2011/32**

(73) Patentinhaber: **BSH Bosch und Siemens Hausgeräte GmbH**
**81739 München (DE)**

(72) Erfinder:
• **BURGHARDT, Stefan**
**83253 Rimsting (DE)**
• **ENGLISCH, Christian**
**83324 Ruhpolding (DE)**

(56) Entgegenhaltungen:
**EP-A1- 1 460 396       FR-A1- 2 488 991**
**US-A1- 2005 252 294    US-A1- 2006 203 877**

**Beschreibung**

Die Erfindung betrifft einen Warmwasserspeicher und ein Verfahren zum Betreiben eines Warmwasserspeichers nach den Oberbegriffen der unabhängigen Ansprüche.

Für Benutzer von Warmwasserspeichern ist es meist schwierig, den Wärmeinhalt des Speichers abzuschätzen. Dies ist besonders dann schwierig, wenn zuvor bereits eine Teilmenge warmen Wassers gezapft wurde. Die Nachheizzeit ist relativ lange und der Benutzer möchte beispielsweise wissen, ob noch ein Duschbad oder eine Wannenfüllung möglich ist.

Bekannt ist, die Bestimmung des Energieinhalts des Warmwasserspeichers mittels Temperatursensoren vorzunehmen. Die Genauigkeit der anzeige ist dabei abhängig von der Anzahl der Sensoren. Bei Verwendung nur weniger Sensoren ist die Bestimmung entsprechend ungenau. Je mehr Sensoren verwendet werden desto genauer kann der Übergang warm/kalt im Warmwasserspeicher bestimmt werden und desto genauer kann die Anzeige des verfügbaren Wärmeinhalts bzw. der restlichen Warmwassermenge erfolgen. Damit steigt jedoch der Aufwand an Auswerteelektronik und Verdrahtung ebenso wie die Kosten für zusätzliche Bauteile.

So ist aus der DE 195 43 761 A1 bekannt, Integral-Temperatursensoren zu verwenden, die eine hohe Genauigkeit ermöglichen.

Aus der US 2,757,869 ist bekannt, eine gewünschte Temperatur in einem Warmwasserspeicher zu erkennen, indem ein Wandler durch Simmern des Wassers nahe dem Siedepunkt hervorgerufene Vibrationen in einen Wechselstrom umwandelt, mit dem ein elektromagnetisches Ventil bestromt wird. Das Ventil steuert die Brennstoffzufuhr zum Warmwasserspeicher. Steigt die Temperatur über den Bereich des Simmerns an, so dass das Wasser zu kochen beginnt, wird die Bestromung des Elektromagneten und damit die Beheizung des Warmwasserspeichers unterbrochen.

US 2005/252294 A1 und FR 2488991 A1 offenbaren Vorrichtungen zum Messen der Temperatur eines flüssigen Mediums mit Hilfe akustischer Sensoren.

Aufgabe der Erfindung ist eine kostengünstige und genaue Bestimmung eines Wärmeinhalts eines Warmwasserspeichers. Eine weitere Aufgabe besteht in der Angabe eines entsprechenden Warmwasserspeichers.

Die Aufgaben werden erfindungsgemäß mit den Merkmalen des unabhängigen Anspruchs 1 gelöst.

Die weiteren Ansprüche betreffen vorteilhafte Ausgestaltungen der Erfindung.

Die Erfindung geht aus von eine, Warmwasserspeicher mit einem in einem Behälter angeordneten Wasservolumen, wobei der Behälter ein geodätisch oberes Ende und ein dem gegenüberliegendes unteres Ende aufweist.

Es wird vorgeschlagen, dass zur Bestimmung eines Energiegehalts des Wasservolumens ein akustischer Sender und ein akustischer Empfänger im Wasservolumen angeordnet sind, um ein Schallsignal im Wasservolumen zu bestimmen, und dass eine Auswerteinheit vorgesehen ist, die aus dem Schallsignal den verfügbaren Energieinhalt ableitet. Vorteilhaft kann der Energieinhalt aus einer mittleren Temperatur im Behälter extrahiert werden. Die Messung erfolgt schnell und genau, so dass eine präzise Bestimmung des Ladezustands im Behälter erfolgen kann. Die Lösung ist preiswert, da auf aufwändige Temperatursensor-Installationen und Verkabelung im Behälter verzichtet werden kann, die für eine Bestimmung vergleichbarer Genauigkeit notwendig wäre. Die Erfindung ist besonders für große Speichervolumina geeignet. Vorteilhaft ist, dass die Bestimmung des Energieinhalts des Wasservolumens unabhängig von der thermischen Anbindung von Sensoren an das Wasservolumen erfolgen kann. Die Bestimmung des Energieinhalts kann insbesondere in Echtzeit erfolgen, so dass dem Benutzer signalisiert werden kann, wie viel warmes Wasser noch zur Verfügung steht.

Gemäß einer vorteilhaften Weiterbildung kann der Sender als Ultraschallsender ausgebildet sein. Ultraschallsender stehen für unterschiedliche Intensitäten und Volumina zur Verfügung.

Gemäß einer weiteren vorteilhaften Weiterbildung kann zwischen Sender und Empfänger wenigstens eine einfache Längserstreckung des Behälters ausgebildet sein. Durch die große Entfernung kann die Messgenauigkeit verbessert werden. Zudem erfolgt in üblichen Warmwasserbehältern der Zulauf des kalten Wassers von unten, so dass das Schallsignal die gesamten Wasserschichtungen durchlaufen kann und eine mittlere Temperatur des im Warmwasserbehälter gespeicherten Wassers bestimmt werden kann.

Gemäß einer vorteilhaften Weiterbildung kann der Sender am geodätisch oberen Ende angeordnet sein. Alternativ können Sender und Empfänger in einer gemeinsame Baugruppe integriert sein, was eine kompakte Anordnung ergibt, bei der die Laufstrecke des Schallsignals verdoppelt ist, verglichen mit einer Ausgestaltung bei der der Sender an einem Ende und der Empfänger am gegenüberliegenden Ende des Behälters angeordnet ist.

Gemäß einer weiteren vorteilhaften Weiterbildung kann die Baugruppe am geodätisch oberen Ende angeordnet sein. Am oberen Ende ist ausreichend Bauraum vorhanden, während am unteren Ende des Warmwasserspeichers in der Regel Zuleitung und Ableitung angeordnet sind und den Bauraum einengen. Denkbar ist selbstverständlich jedoch auch eine Anordnung am unteren Ende.

Erfindungsgemäß ist eine Anzeige vorgesehen, die den verfügbaren Energieinhalt abhängig vom erfassten Schallsignal signalisiert. Die Anzeige kann den Energieinhalt in Echtzeit signalisieren, so dass der Benutzer stets den aktuellen Inhalt erkennen kann. Denkbar ist beispielsweise eine Farbcodierung. So kann eine z. B. grüne Anzeige signalisieren, dass eine ausreichende Warmwassermenge für mindestens ein Vollbad oder ein Duschbad mit einer vorgegebenen Zeitdauer zur Verfügung steht. Ebenso kann farblich angezeigt werden, ob noch ein ausreichender Energieinhalt für ein oder mehrere Duschbäder, jedoch nicht mehr für ein Vollbad vorhanden ist und dergleichen. Die Anzeige kann jedoch auch in Text oder Zahlen den verfügbaren Energieinhalt für eine Anzahl von Duschbändern und/oder Vollbädern signalisieren.

Erfindungsgemäß ist eine Wärmeisolierung des Behälters zum Dämpfen des Schallsignals ausgebildet. Damit kann eine akustische Beeinträchtigung des Benutzers oder von Haustieren in der Umgebung des Warmwasserspeichers vermieden werden.

Die Erfindung geht weiterhin aus von einem Verfahren zum Betreiben eines Warmwasserspeichers.

Es wird vorgeschlagen, dass zur Bestimmung eines Energiegehalts des Warmwasserspeichers ein akustischer Sender Schallwellen durch ein Wasservolumen sendet, die ein akustischer Empfänger empfängt, wobei die Schallwellen wenigstens einmal durch das Wasservolumen laufen, und wobei aus einem Schallsignal der Energieinhalt des Wasservolumens abgeleitet wird.

Gemäß einer vorteilhaften Weiterbildung kann der Energieinhalt aus einer Schalllaufzeit abgeleitet werden. Die Schalllaufzeit kann leicht durch aus einer Phasenverschiebung zwischen gesendetem und empfangenen Schallsignal bestimmt werden.

Gemäß einer weiteren vorteilhaften Weiterbildung kann ein dem ermittelten Energieinhalt des Wasservolumens entsprechender Wert ausgegeben werden. Es kann vorteilhaft das Volumen des Behälters herangezogen, um den Energieinhalt aus dem Schallsignal abzuleiten. Ferner kann zur Bestimmung des Energieinhalts auch die Temperatur des zugeleiteten kalten Wassers herangezogen werden. Ist eine Mischtemperatur bei der Entnahme des Wassers aus dem Warmwasserbehälter bekannt, etwa durch eine voreingestellte Entnahmetemperatur, kann eine solche Entnahme-Mischtemperatur bei der Ableitung einer verfügbaren Anzahl von Duschbädern und/oder Wannenbädern herangezogen werden. Bei Duschbädern kann auch eine Zeitdauer pro Duschbad herangezogen werden, etwa eine mittlere Duschdauer, oder es kann eine mittlere Duschdauer pro Duschbad vorgeschlagen werden.

Gemäß einer weiteren vorteilhaften Weiterbildung können die Schallwellen das Wasservolumen zwischen Sender und Empfänger mindestens zweimal durchlaufen. Durch eine Verlängerung der Laufstrecke der Schallwellen kann die Messgenauigkeit erhöht werden

Gemäß einer weiteren vorteilhaften Weiterbildung kann eine Ausgabe des Energieinhalts des Wasservolumens in Einheiten eines Duschbads und/oder eines Wannenbads erfolgen.

Gemäß einer weiteren vorteilhaften Weiterbildung kann bei nicht ausreichendem Energieinhalt des Wasservolumens eine voraussichtliche Wartezeit bis zur Bereitstellung eines ausreichenden Energieinhalts ausgegeben werden.

Gemäß einer weiteren vorteilhaften Weiterbildung kann die Bestimmung des Energieinhalts kontinuierlich erfolgen. Der Benutzer ist stets zeitgenau über den Energieinhalt des Warmwasserspeichers informiert.

Gemäß einer weiteren vorteilhaften Weiterbildung kann die Bestimmung des Energieinhalts diskontinuierlich erfolgen. Der Benutzer kann z.B. den Energieinhalt des Warmwasserspeichers auf Abruf erfahren.

Anhand eines in der Zeichnung dargestellten Ausführungsbeispiels wird die Erfindung nachfolgend näher beschrieben. Es zeigen

Fig. 1 eine schematische Darstellung eines bevorzugten Warmwasserspeichers in einer ersten Ausgestaltung mit getrenntem Sender und Empfänger;

Fig. 2 eine schematische Darstellung eines bevorzugten Warmwasserspeichers in einer zweiten Ausgestaltung mit Sender und Empfänger in einer Baueinheit; und

Fig. 3 ein Flussdiagramm eines bevorzugten Verfahrensablaufs.

In den Figuren werden gleiche oder im Wesentlichen gleich bleibende Elemente mit den gleichen Bezugszeichen versehen.

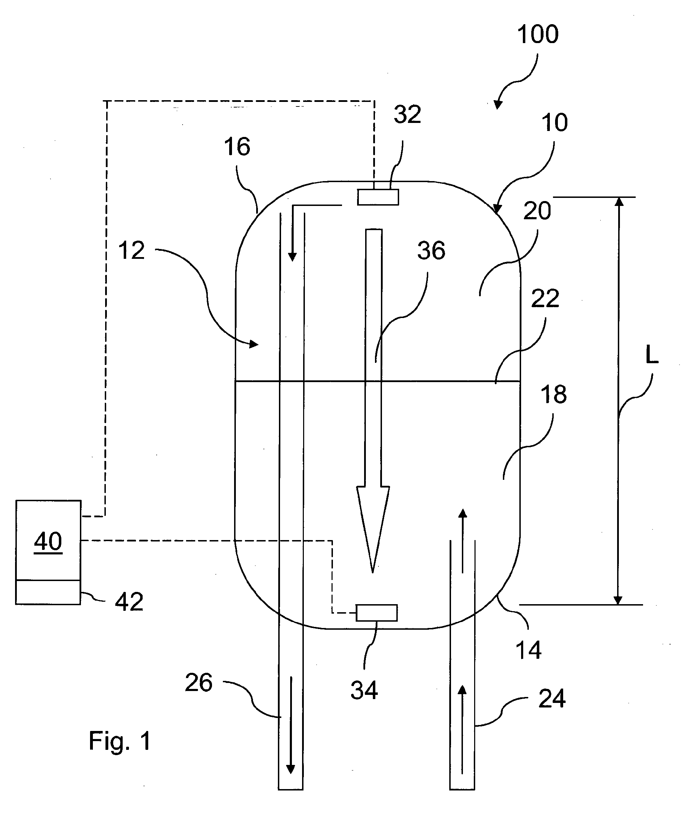

Fig. 1 zeigt zur Erläuterung der Erfindung eine erste bevorzugte Ausgestaltung eines Warmwasserspeichers 100 gemäß der Erfindung. Der Warmwasserspeicher 100 umfasst einen Behälter 10 mit einem in Inneren angeordneten Wasservolumen 12. Der Behälter weist eine übliche Wärmeisolierung auf (nicht dargestellt), um einen Wärmeverlust zu vermeiden, sowie Heizelemente (nicht dargestellt), um Wasser im Behälter 10 zu erhitzen.

Kaltes Wasser 18 ist über eine Zuleitung 24 in einen geodätisch unteren Bereich 14 des Behälters 10 zuführbar. Eine Ableitung 26, aus der warmes Wasser 20 aus dem Behälter 10 entnehmbar ist, erstreckt sich bis in einen geodätisch oberen Bereich 16 des Behälters 10. An die Ableitung 26 kann ein Mischventil (nicht dargestellt) zum Mischen mit kaltem Wasser gekoppelt sein, um das entnommene warme Wasser 20 auf eine etwaig gewünschte niedrigere Temperatur zu mischen.

Im gezeigten Beispiel ist eine Wasserschichtung im Behälter 10 ausgebildet, bei der etwa die Hälfte des warmen Wassers 20 entnommen ist und mit kaltem Wasser 18 ersetzt wurde. Zwischen dem kalten Wasser 18 und dem warmen Wasser 20 ist ein Übergang 22 ausgebildet.

An einem geodätisch oberen Ende 16 des Behälters 10 ist ein Sender 32 und an einem gegenüberliegenden unteren Ende 14 ein Empfänger 34 angeordnet. Sender 32 und Empfänger 34 tauchen in das Wasservolumen 12 ein. Der Sender 32 kann Schallwellen 36 emittieren, die sich im Wasser 20, 18 ausbreiten und vom Empfänger 34 aufgefangen werden können.

Die Schallgeschwindigkeit c_FL einer Flüssigkeit ergibt sich aus der Formel

$$c\_FL = \sqrt{\frac{K}{\rho}},$$

wobei *K* das Kompressionsmodul und $\rho$ die Dichte der Flüssigkeit ist. Das Kompressionsmodul für Wasser ist $K = 2,08 \cdot 10^9$ Pa bei Normaldruck und steigt mit wachsendem Druck geringfügig an.

Die Dichte $\rho$ von Wasser fällt monoton zwischen 0°C und 95°C von 1000 kg/m$^3$ auf etwa 960 kg/m$^3$, während die Schallgeschwindigkeit im gleichen Temperaturbereich von etwa 1442 m/s auf etwa 1470 m/s steigt.

Zur Bestimmung eines Energiegehalts des Wasservolumens 12 kann vorzugsweise eine Schalllaufzeit des Schallsignals im Wasservolumen 12 bestimmt werden, das alle Wasserschichten im Behälter 10 durchläuft. Aus der Schallaufzeit t_lauf, welche die Schallwellen 36 benötigen, den Abstand zwischen Sender 32 und Empfänger 34, vorzugsweise die Längserstreckung L des Behälters 10, kann eine damit gekoppelte eine Auswerteeinheit 40 eine gemittelte Wassertemperatur <T> ermitteln. Diese gemittelte Temperatur <T> ist ein gutes Maß für den Energieinhalt des Behälters 10. Eine mit der Auswerteeinheit 40 gekoppelte Anzeige 42 signalisiert den verfügbaren Energieinhalt abhängig von der aktuellen Schalllaufzeit t_lauf in geeigneter Weise.

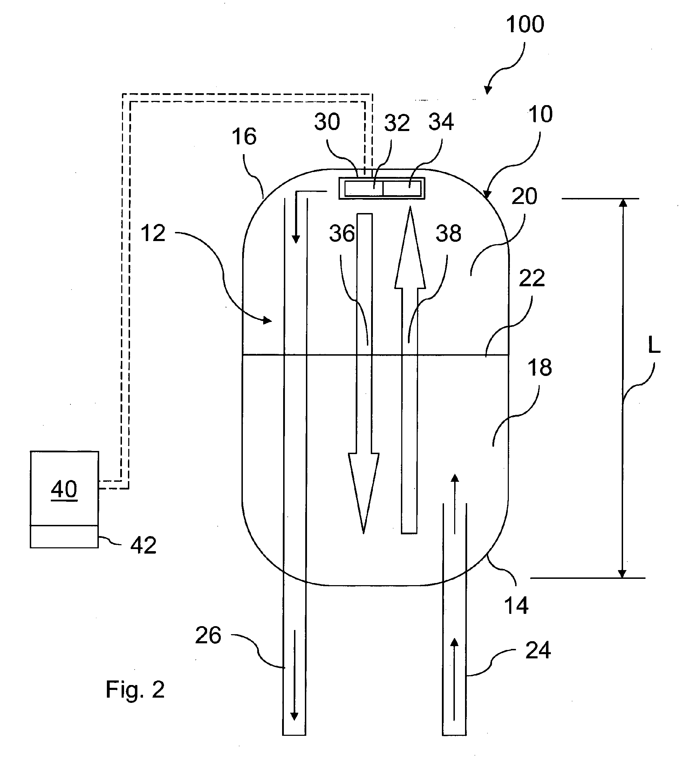

Fig. 2 zeigt eine alternative Ausgestaltung eines bevorzugten Warmwasserspeichers 100 gemäß der Erfindung. Die Anordnung entspricht weitgehend derjenigen in Fig. 1. Soweit die Anordnung in Fig. 2 derjenigen in Fig. 1 entspricht, wird zur Vermeidung unnötiger Wiederholungen auf die Beschreibung dort verwiesen.

Im Gegensatz zur Ausgestaltung in Fig. 1 sind Sender 32 und Empfänger 34 nunmehr in einer kompakten Baueinheit 30 zusammengefasst. Die Baueinheit 30 ist am geodätisch oberen Ende 16 des Behälters 10 angeordnet. Dadurch empfängt der Empfänger 34 nicht mehr die direkt abgestrahlten Schallwellen 36 des Senders 32, sondern ein am unteren Ende des Behälters 10 reflektiertes Signal 38, so dass faktisch der Laufweg des empfangenen Schallsignals 38 verdoppelt ist. Vorzugsweise entspricht der Laufweg der doppelten Längserstreckung L des Behälters 10, womit eine Verbesserung der Messgenauigkeit erreicht wird.

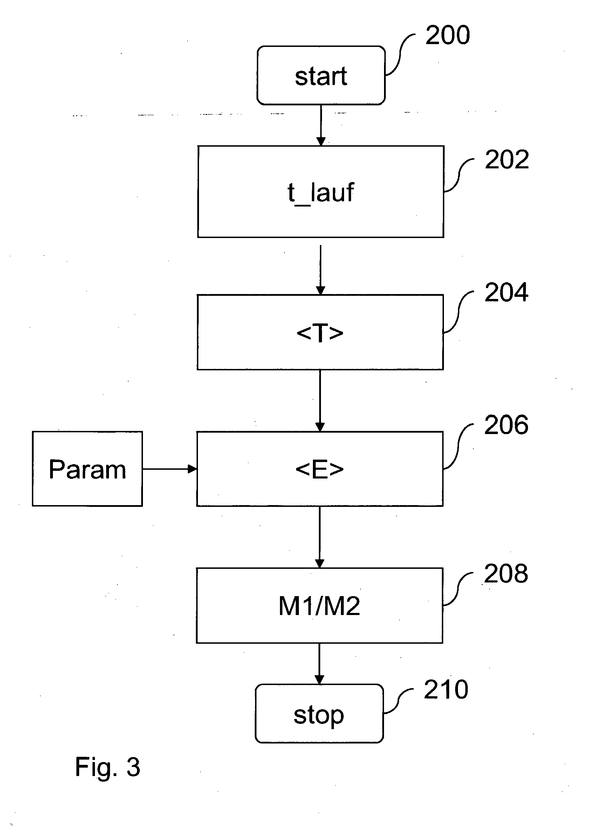

Fig. 3 zeigt ein Flussdiagramm eines beispielhaften Ablaufs der Bestimmung eines Energieinhalts eines Warmwasserspeichers 100, wie er in Fig.1 oder Fig. 2 dargestellt ist.

Die Messung starten in Schritt 200. In Schritt 202 wird die Schallaufzeit t_lauf der vom Empfänger 32 abgestrahlten und vom Empfänger 34 empfangenen Schallwellen 36 oder 36 und 38, je nach Ausgestaltung des Warmwasserbehälters 100.

Aus der Schallaufzeit t_lauf wird in Schritt 204 eine mittlere Temperatur <T> des Wassers im Behälter 12 in der Auswerteeinheit 40 berechnet und daraus in Schritt 206 ein Energieinhalt bestimmt. Dazu können verschiedene Parameter herangezogen werden, etwa das Volumen des Behälters, die Wassertemperatur des zufließenden Wassers, eine etwaig voreingestellte Entnahmetemperatur, eine etwaig voreingestellte Entnahmedauer für Warmwasser und dergleichen. In Schritt 208 kann ein dem Energieinhalt entsprechender Wert M1 und/oder M2 gebildet werden, welcher dann in der Anzeige 42 dargestellt werden kann. Der Ablauf endet in Schritt 210.

Der Ablauf kann kontinuierlich erfolgen, so dass permanent der Energieinhalt des Wasserspeichers 100 angezeigt wird, und/oder er kann z.B. manuell vom Benutzer abgerufen werden.

Denkbar ist, dass abhängig vom ermittelten Energieinhalt ein Aufheizen des Warmwasserbehälters 100 erfolgt, etwa Tageszeitabhängig, so dass z.B. morgens und/oder abends und/oder zu anderen vorbekannten Nutzungszeiten eine thermische Aufladung des Warmwasserbehälters 100 erfolgen kann.

Die Erfindung ermöglicht einen verbesserten Bedienkomfort für den Benutzer und ist besonders für große Warmwasserbehälters 100 vorteilhaft.

Bezugszeichenliste

| | |
|---|---|
| 10 | Behälter |
| 12 | Wasservolumen |
| 14 | unteres Ende |
| 16 | oberes Ende |
| 18 | kaltes Wasser |
| 20 | warmes Wasser |
| 22 | Übergang |
| 24 | Zuleitung |
| 26 | Ableitung |
| 30 | Baueinheit |
| 32 | Sender |
| 34 | Empfänger |
| 36 | Schallwelle |
| 38 | Schallwelle |
| 40 | Einheit |
| 42 | Anzeige |
| 100 | Warmwasserspeicher |
| | |
| L | Längserstreckung |

**Patentansprüche**

1. Warmwasserspeicher (100) mit einem in einem Behälter (10) angeordneten Wasservolumen (12), wobei der Behälter (10) ein geodätisch oberes Ende (16) und ein dem gegenüberliegendes unteres Ende (14) aufweist, wobei zur Bestimmung eines Energiegehalts des Wasservolumens (12) ein akustischer Sender (32) und ein akustischer Empfänger (34) im Wasservolumen (12) angeordnet sind, um eine Schalllaufzeit im Wasservolumen (12) zu bestimmen, und dass eine Auswerteeinheit (40) vorgesehen ist, die aus der Schalllaufzeit den verfügbaren Energieinhalt ableitet, **dadurch gekennzeichnet, dass** eine Anzeige (42) vorgesehen ist, die den verfügbaren Energieinhalt abhängig von der aktuellen Schalllaufzeit signalisiert und wobei eine Wärmeisolierung des Behälters (10) zum Dämpfen des Schallsignals ausgebildet ist.

2. Warmwasserspeicher nach Anspruch 1, **dadurch gekennzeichnet, dass** der Sender (32) als Ultraschallsender ausgebildet ist.

3. Warmwasserspeicher nach Anspruch 1 oder 2, **dadurch gekennzeichnet, dass** zwischen Sender (32) und Empfänger (34) wenigstens eine einfache Längserstreckung (L) des Behälters (10) ausgebildet ist.

4. Warmwasserspeicher nach einem der vorhergehenden Ansprüche, **dadurch gekennzeichnet, dass** der Sender (32) am geodätisch oberen Ende (16) angeordnet ist.

5. Warmwasserspeicher nach einem der vorhergehenden Ansprüche, **dadurch gekennzeichnet, dass** Sender (32) und Empfänger (34) in eine gemeinsame Baugruppe (30) integriert sind.

6. Warmwasserspeicher nach Anspruch 5, **dadurch gekennzeichnet, dass** die Baugruppe (30) am geodätisch oberen Ende (16) angeordnet ist.

## Claims

1. Hot water tank (100) with a volume of water (12) disposed within a container (10), wherein the container (10) has a geodetic upper end (16) with a lower end (14) opposite it, wherein to determine an energy content of the volume of water (12), an acoustic transmitter (32) and an acoustic receiver (34) are disposed in the volume of water (12) to determine a sound propagation time in the volume of water (12) and that an evaluation unit (40) is provided, which derives the available energy content from the sound propagation time, **characterised in that** a display (42) is provided, which signals the available energy content as a function of the current sound propagation time and wherein a thermal insulation of the container (10) is configured to attenuate the sound signal.

2. Hot water tank according to claim 1, **characterised in that** the transmitter (32) is configured as an ultrasonic transmitter.

3. Hot water tank according to claim 1 or 2, **characterised in that** at least one simple longitudinal extension (L) of the container (10) is configured between the transmitter (32) and receiver (34).

4. Hot water tank according to one of the preceding claims, **characterised in that** the transmitter (32) is disposed at the geodetic upper end (16).

5. Hot water tank according to one of the preceding claims, **characterised in that** the transmitter (32) and receiver (34) are integrated in a shared module (30).

6. Hot water tank according to claim 5, **characterised in that** the module (30) is disposed at the geodetic upper end (16).

## Revendications

1. Ballon d'eau chaude (100) avec un volume d'eau (12) disposé dans un réservoir (10), dans lequel le réservoir (10) présente une extrémité supérieure géodésique (16) et une extrémité inférieure opposée (14), dans lequel un émetteur acoustique (32) et un récepteur acoustique (34) sont disposés dans le volume d'eau (12) pour déterminer une teneur énergétique du volume d'eau (12), afin de déterminer une célérité de l'onde sonore dans le volume d'eau (12) et dans lequel est prévue une unité d'évaluation (40) qui déduit de la célérité de l'onde sonore la teneur énergétique disponible, **caractérisé en ce qu'**un affichage (42) qui signale la teneur énergétique disponible en fonction de la célérité de l'onde sonore actuelle est prévu et dans lequel une isolation thermique (10) du réservoir est constituée afin d'atténuer le signal sonore.

2. Ballon d'eau chaude selon la revendication 1, **caractérisé en ce que** l'émetteur (32) est exécuté sous forme d'émetteur d'ultrasons.

3. Ballon d'eau chaude selon la revendication 1 ou 2, **caractérisé en ce qu'**au moins une étendue longitudinale (L) simple du réservoir (10) est exécutée entre l'émetteur (32) et le récepteur (34).

4. Ballon d'eau chaude selon l'une des revendications précédentes, **caractérisé en ce que** l'émetteur (32) est disposé sur l'extrémité supérieure géodésique (16).

**5.** Ballon d'eau chaude selon l'une des revendications précédentes, **caractérisé en ce que** l'émetteur (32) et le récepteur (34) sont intégrés dans un module commun (30).

**6.** Ballon d'eau chaude selon la revendication 5, **caractérisé en ce que** le module (30) est disposé sur l'extrémité supérieure géodésique (16).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19543761 A1
- US 2757869 A
- US 2005252294 A1
- FR 2488991 A1